# EUROPÄISCHE PATENTSCHRIFT

(11) **EP 1 934 891 B1**
(45) Veröffentlichungstag und Bekanntmachung des Hinweises auf die Patenterteilung: **09.12.2009**
(21) Anmeldenummer: 07821155.4
(22) Anmeldetag: 10.10.2007
(51) Int. Cl.: G06K 19/067, G06K 7/08

(54) **SYSTEM UND VERFAHREN ZUM SPEICHERN UND LESEN VON INFORMATIONEN**
SYSTEM AND METHOD FOR STORING AND READING INFORMATION
SYSTEME ET PROCEDE POUR ENREGISTRER ET LIRE DES INFORMATIONS

(30) Priorität: 12.10.2006 DE 102006048401
(43) Veröffentlichungstag der Anmeldung: 25.06.2008
(73) Patentinhaber: Evonik Degussa GmbH, 45128 Essen (DE)
(72) Erfinder: HÜBLER, Arved, 09111 Chemnitz (DE); FRANZ, Thoralt, 09376 Oelsnitz (DE); OTTO, Michael, 09122 Chemnitz (DE)
(74) Vertreter: Tetzner, Michael
(86) Internationale Anmeldenummer: PCT/EP2007/060787
(87) Internationale Veröffentlichungsnummer: WO 2008/043794

(56) Entgegenhaltungen:
- WO-A-2005/122068
- US-A- 5 471 040

## Beschreibung

Die Erfindung betrifft ein System und ein Verfahren zum Speichern und Lesen von Informationen mit einem Datenspeichermedium zum Speichern einer Information und einer Leseeinheit zum Lesen der im Datenspeichermedium gespeicherten Information.

Aus der Praxis sind analoge Verfahren bekannt, welche die An- oder Abwesenheit von elektrisch leitfähigem Material kapazitiv oder induktiv erkennen können. Dabei werden analoge Signalverläufe, beispielsweise eine Sinusschwingung, in das Material mittels einer Elektrode eingekoppelt und mit einer zweiten Elektrode aufgenommen. Das gemessene Signal kann dann hinsichtlich der Amplitude und ggf. der Phasenlage analysiert werden, um dadurch die An- oder Abwesenheit sowie die Leitfähigkeit des leitfähigen Materials zu ermitteln. Diese Art der Messung ermöglicht differenzierte Auswertemöglichkeiten, wobei beispielsweise Kapazitäten, Widerstände und Induktivitäten gemessen werden können.

Dieses Verfahren hat jedoch den Nachteil dass es bezüglich der benötigten Hardware, welche die erforderlichen Signale erzeugt sowie deren Wirkungen analysiert, relativ aufwendig ist. Außerdem ist die Messanordnung relativ schwierig parallelisierbar und vielfach relativ langsam.

Aus der DE 10 2004 022 752 A1 ist eine Vorrichtung zur Echtheitsprüfung eines Wert- oder Sicherheitsdokuments bekannt, die mit einer Messung der dielektrischen Eigenschaften arbeitet.

Aus der US-A-5 471 040 und der WO-A-2005/122068 sind Systeme mit den Merkmalen des Oberbegriffes des Anspruchs 1 zum Speichern/Lesen von Informationen auf/von einem Datenspeichermedium bekannt, wobei zum Lesen der Daten auf dem Datenträger ein hochfrequente Wechselspannung verwendet wird.

In der EP 0 260 221 A2 wird zum Auslesen eines Datenträgers eine kontaktlose Informationsübertragung vorgeschlagen, wobei zum Auslesen eine kontinuierlich anliegende Wechselspannung eines Rechteckgenerators verwendet wird.

Der Erfindung liegt daher die Aufgabe zugrunde, eine relativ kostengünstige und schnellarbeitende Leseeinheit zu schaffen.

Erfindungsgemäß wird diese Aufgabe durch die Merkmale der Ansprüche 1 und 12 gelöst.

Das erfindungsgemäße System zum Speichern und Lesen von Informationen weist ein Datenspeichermedium zum Speichern einer Information und eine Leseeinheit zum Lesen der im Datenspeichermedium gespeicherten Information auf, wobei das Datenspeichermedium ein Dielektrikum aufweist und die Informationen auf das Vorhandensein bzw. Nichtvorhandensein von wenigstens einer durch die Leseeinheit kapazitiv erkennbaren Speicherelektrode im Datenspeichermedium gebildet wird und die Leseeinheit wenigstens eine Einkoppelelektrode und wenigstens eine Leseelektrode aufweist, wobei zum Lesen der Information das Datenspeichermedium und die Leseeinheit derart miteinander koppelbar sind, dass eine vorhandene, durch die Leseeinheit kapazitiv erkennbare Speicherelektrode mit der Einkoppelelektrode einen ersten Kondensator und mit der wenigstens einen Leseelektrode einen zweiten Kondensator bildet. Die Leseeinheit weist Mittel zur Erzeugung eines digitalen Spannungssprungs an der Einkoppelelektrode und Mittel zum Vergleichen des an der Leseelektrode entstehenden Spannungssprungs mit einer Referenzspannung auf.

Beim erfindungsgemäßen Verfahren zum Auslesen von Informationen aus einem derartigen Datenspeichermedium mit einem derartigen Lesegerät sind eine Vielzahl von durch die Leseeinheit kapazitiv erkennbaren Speicherelektroden und eine Vielzahl von Einkoppelelektroden vorhanden, wobei die Einkoppelelektroden zeitlich nacheinander mit einem digitalen Spannungssprung beaufschlagt werden und der an der Leseelektrode entstehende Spannungssprung mit einer Referenzspannung verglichen wird. Auf diese Weise ist eine sehr schnelle Messung möglich.

Das erfindungsgemäße Prinzip beruht auf der Verwendung eines digitalen Spannungssprungs, d.h. eines Einzelimpulses, und dem direkten Vergleich mit einer Referenzspannung, wodurch das Signal sofort in digitaler Form (1 oder 0) vorliegt und preisgünstig weiterverarbeitet werden kann.

Weitere Ausgestaltungen der Erfindung sind Gegenstand der Unteransprüche.

Gemäß einem bevorzugten Ausführungsbeispiel weist die Leseeinheit weiterhin einen Mikroprozessor auf, der ohne großen Kostenfaktor eine Vielzahl von digitalen Ausgängen aufweisen kann, so dass eine Vielzahl von durch die Leseeinheit kapazitiv erkennbaren Speicherelektroden schnell und zuverlässig überprüft werden kann.

Die Mittel zum Vergleichen des an der Leseelektrode entstehenden Spannungssprungs mit einer Referenzspannung weisen vorzugsweise einen Operationsverstärker in Komparatorschaltung auf.

Weiterhin bestehen die durch die Leseeinheit kapazitiv erkennbaren Speicherelektroden des Datenspeichermediums aus elektrisch leitfähigen Strukturen, insbesondere aus leitfähigen organischen Polymeren, insbesondere PEDOT oder PANI, und bilden eine Codeanordnung. Die elektrisch leitfähige Codeanordnung wird dabei zweckmäßigerweise durch ein Massendruckverfahren, insbesondere durch ein Hoch-, Tief- oder Flachdruckverfahren, erzeugt. Außerdem kann die Codeanordnung auf ein flexibles Substrat, insbesondere auf Papier oder Folie, aufgebracht werden, wobei sie unsichtbar zwischen zwei Substraten angeordnet werden kann.

Weiterhin sind geeignete Maßnahmen zur Störungsminimierung vorzusehen. Diese können beispielsweise darin bestehen, dass das Datenspeichermedium eine Referenzspeicherelektrode aufweist, die zum Überprüfen des Lesegeräts verwendet wird. Auch wäre es denkbar, dass die durch die Leseeinheit kapazitiv erkennbaren Speicherelektroden eine redundante Codeanordnung bilden. Außerdem können zur Filterung von Störungen den Mittel zum Vergleichen des an der Leseelektrode entstehenden Spannungssprungs mit einer Referenzspannung ein Tiefpass und/oder Hochpass vorgeschaltet werden.

Weitere Vorteile und Ausgestaltungen der Erfindung werden im Folgenden anhand der Beschreibung und der Zeichnung näher erläutert.

In der Zeichnung zeigen
- Fig. 1: ein Blockschaltbild des Systems zum Speichern und Lesen von Informationen,
- Fig. 2: eine schematische Darstellung des Datenspeichermediums und
- Fig. 3: eine Schnittdarstellung längs der Linie A-A der Fig. 2.

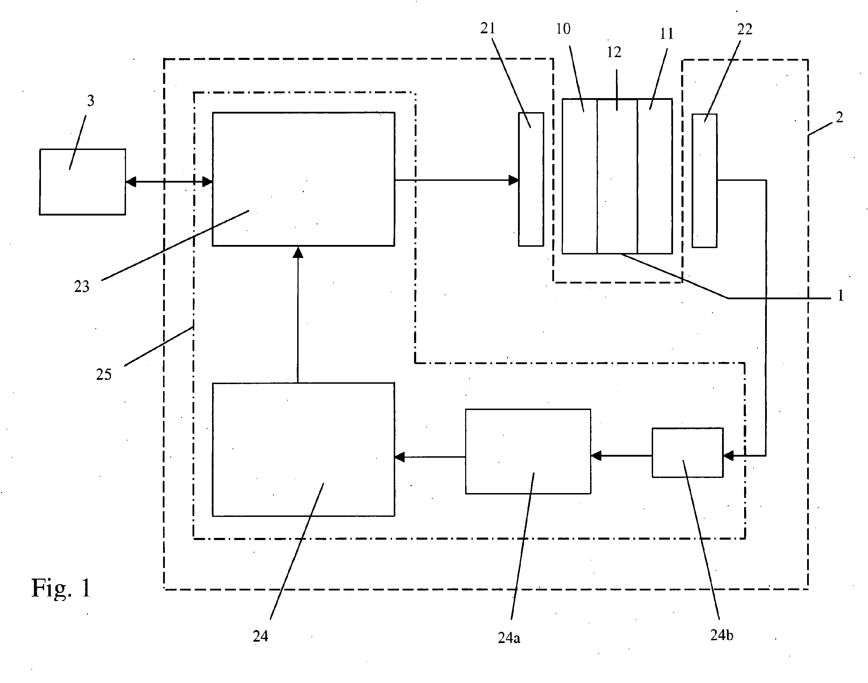

Das im Fig. 1 dargestellte System zum Speichern und Lesen von Informationen weist ein Datenspeichermedium 1 zum Speichern einer Information und eine Leseeinheit 2 zum Lesen der im Datenspeichermedium gespeicherten Information auf.

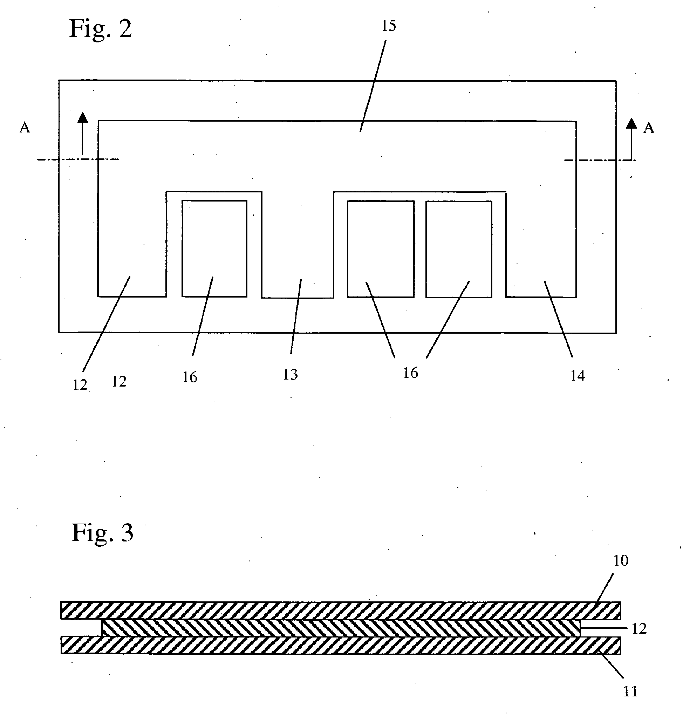

Das in den Fig. 2 und Fig. 3 näher dargestellte Datenspeichermedium weist wenigstens ein erstes Dielektrikum 10 und mehrere durch die Leseeinheit kapazitiv erkennbaren Speicherelektroden 12, 13, 14 und ein zweites Dielektrikum 11 auf, wobei die durch die Leseeinheit kapazitiv erkennbaren Speicherelektroden zwischen den beiden Dielektrika angeordnet sind. Die durch die Leseeinheit kapazitiv erkennbaren Speicherelektroden 12, 13, 14 bilden in der speziellen Anordnung eine Codeanordnung. Die drei durch die Leseeinheit kapazitiv erkennbaren Speicherelektroden 12, 13, 14 stehen dabei fingerartig von einer gemeinsamen Basisfläche 15 ab.

Die oben beschriebene Ausbildung der durch die Leseeinheit kapazitiv erkennbaren Speicherelektroden ermöglicht eine Einbettung zwischen zwei Substrate, ohne dass hierfür ein besonderer Platzbedarf erforderlich ist.

Bei der dargestellten Codeanordnung wären bis zu 6 durch die Leseeinheit kapazitiv erkennbaren Speicherelektroden denkbar. Im dargestellten Ausführungsbeispiel sind jedoch nur der erste, dritte und sechste Finger als durch die Leseeinheit kapazitiv erkennbaren Speicherelektrode ausgebildet, während die dazwischen liegenden Elektrodenflächen 16 keine Verbindung zu Basisfläche 15 aufweisen. Es wäre natürlich auch denkbar, dass diese Elektrodenflächen 16 überhaupt nicht vorhanden sind. Bei einer Codeanordnung mit bis zu sechs durch die Leseeinheit kapazitiv erkennbaren Speicherelektroden können somit 2⁶=64 verschiedene Codeanordnungen realisiert werden. Selbstverständlich können auch eine beliebig andere Anzahl von durch die Leseeinheit kapazitiv erkennbaren Speicherelektroden vorgesehen werden. Es ist insbesondere auch denkbar, dass alle Speicheranordnungen separat angeordnet werden und somit keine gemeinsame Basisfläche aufweisen.

Als Dielektrika 10, 11 kommen insbesondere Substrate aus Papier oder Folie in Betracht. Die Codeanordnung wird zweckmäßigerweise aus leitfähigen organischen Polymeren, insbesondere Polythiophen, Polyanilin und Polypyrrol, PEDOT oder PANI, hergestellt, die mittels eines Massendruckverfahren (Hoch-, Tief- oder Flachdruckverfahren) auf das Substrat aufgedruckt wird. Auf diese Weise lässt sich das Datenspeichermedium in großer Anzahl sowie auf sehr schnelle und kostengünstige Weise herstellen. Wird die Codeanweisung zudem zwischen zwei Substraten (Dielektrikum) eingebettet, ist die Codeanweisung von außen unsichtbar und wird dadurch vor Beschädigungen und Manipulationen geschützt. Im Rahmen der Erfindung ist es aber auch denkbar, dass die Codeanordnung aus anderen leitfähigen Materialen, wie Silberpartikeln, Carbonpartikeln, ITO-Nanopartikeln, , hergestellt wird.

Weiterhin wäre es auch denkbar, dass zunächst eine Codeanordnung mit allen denkbaren durch die Leseeinheit kapazitiv erkennbaren Speicherelektroden gedruckt wird und die eigentliche Information erst nachträglich in das Datenspeichermedium eingeschrieben wird, indem beispielsweise an die durch die Leseeinheit kapazitiv erkennbaren Speicherelektroden, die später nicht mehr vorhanden sein sollen, ein entsprechend hoher Spannungspuls angelegt wird, der zu einer Unterbrechung zwischen der Elektrode und der Basisfläche führt.

Die Leseeinheit 2 weist im Wesentlichen wenigstens eine Einkoppelelektrode 21 und wenigstens eine Leseelektrode 22 auf, wobei zum Lesen der Information das Datenspeichermedium 1 und die Leseeinheit 2 derart miteinander koppelbar sind, dass die Einkoppelelektrode 21 und die durch die Leseeinheit kapazitiv erkennbaren Speicherelektrode 12 einen ersten Kondensator und die Leseelektrode 22 und die durch die Leseeinheit kapazitiv erkennbaren Speicherelektrode 12 einen zweiten Kondensator bilden. Weiterhin weist die Leseeinheit Mittel 23 zur Erzeugung eines digitalen Spannungssprungs an der Einkoppelelektrode 21 sowie Mittel 24 zum Vergleichen des an der Leseelektrode 22 entstehenden Spannungssprungs mit einer Referenzspannung auf. Die Mittel 24 können dabei insbesondere einen Operationsverstärker 24a in Komparatorschaltung aufweisen. Weiterhin kann die Leseeinheit 2 einen Mikroprozessor 25 umfassen, der mit den Mittel 23 zur Erzeugung eines digitalen Spannungssprungs an der Einkoppelelektrode 21 und den Mittel 24 zum Vergleichen des an der Leseelektrode 22 entstehenden Spannungssprungs in Verbindung steht bzw. deren Aufgaben ganz oder teilweise übernimmt. Die Leseeinheit 2 ist außerdem über einen USB-Anschluß an einen Rechner 3 angeschlossen.

Beim Messverfahren wird ein digitaler Spannungssprung, d.h. ein Einzelimpuls, an der Einkoppelelektrode 21 angelegt. Durch das Kondensatorverhalten der Anordnung wird dann an der Leseelektrode 22 ein Spannungssprung entstehen. Die Spannung fällt dann exponentiell ab. Wird nun eine kurze Zeit nach dem angelegten Spannungssprung das Ausgangssignal der Leseelektrode 22 ausgewertet, so kann dadurch auf das Vorhandensein bzw. Nichtvorhandensein einer durch die Leseeinheit kapazitiv erkennbaren Speicherelektrode geschlossen werden.

Die Einkoppelelektroden 21 werden zweckmäßigerweise in größerer Anzahl vorgesehen, so dass jeder möglichen durch die Leseeinheit kapazitiv erkennbaren Speicherelektrode eine Einkoppelelektrode zugeordnet ist. Sind alle durch die Leseeinheit kapazitiv erkennbaren Speicherelektroden wie im dargestellten Ausführungsbeispiel über eine gemeinsame Basisfläche miteinander verbunden, ist lediglich eine Leseelektrode 22 erforderlich. Die Leseelektrode wird im Bereich der Basisfläche 15 angeordnet, während die Einkoppelelektroden in den fingerartigen Bereichen vorgesehen sind. Die Einkoppelelektroden werden dann zeitlich nacheinander mit einem digitalen Spannungssprung beaufschlagt, so dass das jeweilige Ergebnis an der Leseelektrode beobachtet werden kann. So lässt sich auf einfache Art und Weise feststellen, welche der möglichen durch die Leseeinheit kapazitiv erkennbaren Speicherelektroden tatsächlich vorhanden bzw. nicht vorhanden ist

Die Leseelektrode 22 muss wegen der kleinen zu erwartenden Kapazitäten (im Picofarad-Bereich) sehr hochohmig an eine Komparatorschaltung angebunden werden (mehrere Megaohm); dadurch werden allerdings auch sämtliche Störungen aus dem Umfeld (z.B. 50-Hz-Brummen) sehr stark eingekoppelt. Dies kann unter Umständen (je nach Ausführung von Leiterplatte und Gehäuse) zu nicht unwesentlichen Beeinträchtigungen führen. Es werden daher im Folgenden einige Strategien vorgestellt, die einzeln oder gemeinsam zur Störungsminimierung beitragen können:

Bei Verwendung einer Komparatorschaltung wird zweckmäßigerweise vor dem Spannungssprung der Komparatorausgang überprüft. Er muss inaktiv sein, da ansonsten momentan eine Störung anliegt. Die Messung wird wiederholt, bis diese Störung nicht mehr auftritt oder bis die maximale Messdauer erreicht wurde.

Nach dem Spannungssprung und der Messung der Sprungantwort wird ebenfalls - nach einer gewissen Wartezeit (entsprechend der Entladedauer der Kondensatoranordnung) - der Komparatorausgang überprüft. Er muss wiederum inaktiv sein, ansonsten wird die Messung verworfen und wiederholt. Mit dieser Messmethode werden Messfehler reduziert, die während Störungen mit positivem Pegel auftreten (d.h. es werden weniger echte 0-Bits als 1-Bits erkannt). Hochfrequente Störungen werden mit dieser Methode jedoch weniger gut unterdrückt.

Eine andere Möglichkeit besteht darin, dass das Datenspeichermedium eine der Elektroden als Referenzspeicherelektrode aufweist, die zur Überprüfung des Lesegeräts verwendet wird. Unmittelbar vor und/oder nach der Messung einer oder aller durch die Leseeinheit kapazitiv erkennbaren Speicherelektroden wird die Referenzspeicherelektrode gemessen. Ergibt die Referenzspeicherelektrode keinen Pegel, so müsste die Messung der Datenbits verworfen werden. Mit dieser Methode werden Messfehler reduziert, die während Störungen mit negativem Pegel auftreten (es werden weniger echte 1-Bits als 0-Bits erkannt). Hochfrequente Störungen werden auch mit dieser Methode schlecht unterdrückt.

Weiterhin besteht die Möglichkeit, dass die Mittel 24 zum Vergleichen des an der Leseelektrode 22 entstehenden Spannungssprungs mit einer Referenzspannung einen vorgeschalteten (hochohmigen) Tiefpass 24b (R-C-Glied) aufweisen, um hochfrequente Störungen abzuschwächen. Die Dimensionierung des Tiefpasses sollte in der Grenzfrequenz hoch genug sein, um die Steilflankigkeit der Sprungantwort der Messanordnung nur wenig zu beeinträchtigen. Ein zusätzlicher Hochpass würde niederfrequente Störungen unterdrücken und wäre insbesondere zur Unterdrückung der 50-Hz-Netzfrequenzstörungen sinnvoll.

Eine weitere sehr effiziente Möglichkeit besteht darin, wenn die durch die Leseeinheit kapazitiv erkennbaren Speicherelektrode
0n eine redundante Codeanordnung bilden, so dass nach dem Lesen des Datenspeichermediums Prüfsummen gebildet bzw. Integritätstests durchgeführt werden können, um etwaige Störungen beim Lesen der Datenbits auszuschließen. Zweckmäßigerweise werden nicht nur eine, sondern mehrere oder gar alle der oben angeführten Möglichkeiten zur Störungsminimierung angewandt.

## Patentansprüche

1. System zum Speichern und Lesen von Informationen mit einem Datenspeichermedium (1) zum Speichern einer Information und einer Leseeinheit (2) zum Lesen der im Datenspeichermedium gespeicherten Information, wobei das Datenspeichermedium ein Dielektrikum (10, 11) aufweist und die Information durch das Vorhandensein bzw. Nichtvorhandensein von wenigstens einer durch die Leseeinheit kapazitiv erkennbaren Speicherelektrode (12-14) im Datenspeichermedium gebildet wird und die Leseeinheit wenigstens eine Einkoppelelektrode und wenigstens eine Leseelektrode aufweist, wobei zum Lesen der Information das Datenspeichermedium (1) und die Leseeinheit (2) derart miteinander koppelbar sind, dass eine vorhandene, durch die Leseeinheit kapazitiv erkennbare Speicherelektrode (12) mit der Einkoppelelektrode einen ersten Kondensator und mit der wenigstens einen Leseelektrode (22) einen zweiten Kondensator bildet,
**dadurch gekennzeichnet, dass** die Leseeinheit Mittel (23) zur Erzeugung eines digitalen Spannungssprungs an der Einkoppelelektrode (21) und Mittel (24) zum Vergleichen des an der Leseelektrode (22) entstehenden Spannungssprungs mit einer Referenzspannung aufweist.

2. System nach Anspruch 1, **dadurch gekennzeichnet, dass** die Mittel (24) zum Vergleichen des an der Leseelektrode (22) entstehenden Spannungssprungs mit einer Referenzspannung einen Operationsverstärker (24a) in Komparatorschaltung aufweisen.

3. System nach ein oder mehreren der vorhergehenden Ansprüche, **dadurch gekennzeichnet, dass** die Leseeinheit (2) weiterhin einen Mikroprozessor (25) aufweist, der mit den Mitteln zur Erzeugung des digitalen Spannungssprungs an der Einkoppelelektrode (21) und den Mitteln (24) zum Vergleichen des an der Leseelektrode (22) entstehenden Spannungssprungs mit einer Referenzspannung in Verbindung steht.

4. System nach ein oder mehreren der vorhergehenden Ansprüche, **dadurch gekennzeichnet, dass** eine Vielzahl von durch die Leseeinheit kapazitiv erkennbaren Speicherelektroden (12-14) und wenigstens eine entsprechende Vielzahl von Einkoppelelektroden (21) eine Vielzahl von ersten Kondensatoren und die Vielzahl der durch die Leseeinheit kapazitiv erkennbaren Speicherelektroden (12-14) mit einer Leseelektrode den zweiten Kondensator bilden.

5. System nach ein oder mehreren der vorhergehenden Ansprüche, **dadurch gekennzeichnet, dass** die durch die Leseeinheit kapazitiv erkennbaren Speicherelektroden (12-14) eine Codeanordnung bilden, die aus leitfähigen organischen Polymeren, insbesondere PEDOT oder PANI, bestehen.

6. System nach ein oder mehreren der vorhergehenden Ansprüche, **dadurch gekennzeichnet, dass** die durch die Leseeinheit kapazitiv erkennbaren Speicherelektroden (12-14) eine elektrisch leitfähige Codeanordnung bilden, die durch ein Massendruckverfahren, insbesondere durch ein Hoch-, Tief- oder Flachdruckverfahren, erzeugt sind.

7. System nach ein oder mehreren der vorhergehenden Ansprüche, **dadurch gekennzeichnet, dass** die durch die Leseeinheit kapazitiv erkennbaren Speicherelektroden (12-14) eine elektrisch leitfähige Codeanordnung bilden, die auf flexible Substrate, wie Papier oder Folie, aufgebracht ist.

8. System nach ein oder mehreren der vorhergehenden Ansprüche, **dadurch gekennzeichnet, dass** die durch die Leseeinheit kapazitiv erkennbaren Speicherelektroden (12-14) eine elektrisch leitfähige Codeanordnung bilden, die oberflächlich unsichtbar zwischen zwei Substraten angeordnet ist.

9. System nach ein oder mehreren der vorhergehenden Ansprüche, **dadurch gekennzeichnet, dass** das Datenspeichermedium (1) eine Referenzspeicherelektrode aufweist, die zur Überprüfung des Lesegeräts (2) verwendet wird.

10. System nach ein oder mehreren der vorhergehenden Ansprüche, **dadurch gekennzeichnet, dass** die durch die Leseeinheit kapazitiv erkennbaren Speicherelektroden (12-14) eine redundante Codeanordnung bilden.

11. System nach ein oder mehreren der vorhergehenden Ansprüche, **dadurch gekennzeichnet, dass** die Mittel (24) zum Vergleichen des an der Leseelektrode entstehenden Spannungssprungs mit einer Referenzspannung einen vorgeschalteten Tiefpass und/oder Hochpass (24b) zur Filterung von Störungen aufweisen.

12. Verfahren zum Auslesen von Informationen aus einem Datenspeichermedium (1) gemäß einem oder mehreren der vorhergehenden Ansprüche mit einem Lesegerät (2) gemäß einem oder mehreren der vorhergehenden Ansprüche, wobei eine Vielzahl von durch die Leseeinheit kapazitiv erkennbaren Speicherelektroden (12-14) und eine Vielzahl von Einkoppelelektroden (21) vorhanden sind, und die Einkoppelelektroden zeitlich nacheinander mit einem digitalen Spannungssprung beaufschlagt werden und der an der Leseelektrode (22) entstehende Spannungssprung mit einer Referenzspannung verglichen wird.

13. Verfahren nach Anspruch 12, **dadurch gekennzeichnet, dass** die Mittel zum Vergleichen des an der Leseelektrode (22) entstehenden Spannungssprungs mit einer Referenzspannung vor und/oder nach einer Messung überprüft werden.

14. Verfahren nach Anspruch 12, **dadurch gekennzeichnet, dass** vor und/oder nach dem Lesen des Datenspeichermediums (1) wenigstens eine im Datenspeichermedium vorhandene Referenzelektrode überprüft wird.

15. Verfahren nach Anspruch 12, **dadurch gekennzeichnet, dass** die durch die Leseeinheit kapazitiv erkennbaren Speicherelektroden (12-14) eine redundante Codeanordnung bilden und nach dem Lesen des Datenspeichermediums (1) Prüfsummen gebildet bzw. Integritätstests durchgeführt werden, um etwaige Störungen beim Lesen des Datenspeichermediums (1) auszuschließen.

## Claims

1. System for storing and reading information, having a data storage medium (1) for storing an item of information and a reading unit (2) for reading the information stored in the data storage medium, the data storage medium having a dielectric (10, 11), and the information being formed by the presence or absence of at least one storage electrode (12-14), which can be capacitively detected by the reading unit, in the data storage medium, and the reading unit having at least one coupling electrode and at least one reading electrode, in which case, in order to read the information, the data storage medium (1) and the reading unit (2) can be coupled to one another in such a manner that a storage electrode (12) which is present and can be capacitively detected by the reading unit forms a first capacitor with the coupling electrode and forms a second capacitor with the at least one reading electrode (22),
**characterized in that** the reading unit has means (23) for generating a digital voltage jump at the coupling electrode (21) and means (24) for comparing the voltage jump produced at the reading electrode (22) with a reference voltage.

2. System according to Claim 1, **characterized in that** the means (24) for comparing the voltage jump produced at the reading electrode (22) with a reference voltage have an operational amplifier (24a) in a comparator circuit.

3. System according to one or more of the preceding claims, **characterized in that** the reading unit (2) also has a microprocessor (25) which is connected to the means for generating the digital voltage jump at the coupling electrode (21) and to the means (24) for comparing the voltage jump produced at the reading electrode (22) with a reference voltage.

4. System according to one or more of the preceding claims, **characterized in that** a multiplicity of storage electrodes (12-14), which can be capacitively detected by the reading unit, and at least a corresponding multiplicity of coupling electrodes (21) form a multiplicity of first capacitors, and the multiplicity of storage electrodes (12-14) which can be capacitively detected by the reading unit form the second capacitor with a reading electrode.

5. System according to one or more of the preceding claims, **characterized in that** the storage electrodes (12-14) which can be capacitively detected by the reading unit form a code arrangement which is composed of conductive organic polymers, in particular PEDOT or PANI.

6. System according to one or more of the preceding claims, **characterized in that** the storage electrodes (12-14) which can be capacitively detected by the reading unit form an electrically conductive code arrangement which is produced by means of a mass printing method, in particular by means of a letterpress, gravure or planographic printing method.

7. System according to one or more of the preceding claims, **characterized in that** the storage electrodes (12-14) which can be capacitively detected by the reading unit form an electrically conductive code arrangement which is applied to flexible substrates such as paper or film.

8. System according to one or more of the preceding claims, **characterized in that** the storage electrodes (12-14) which can be capacitively detected by the reading unit form an electrically conductive code arrangement which is arranged between two substrates in a superficially invisible manner.

9. System according to one or more of the preceding claims, **characterized in that** the data storage medium (1) has a reference storage electrode which is used to check the reading device (2).

10. System according to one or more of the preceding claims, **characterized in that** the storage electrodes (12-14) which can be capacitively detected by the reading unit form a redundant code arrangement.

11. System according to one or more of the preceding claims, **characterized in that** the means (24) for comparing the voltage jump produced at the reading electrode with a reference voltage have an upstream low-pass and/or high-pass filter (24b) for filtering interference.

12. Method for reading information from a data storage medium (1) according to one or more of the preceding claims using a reading device (2) according to one or more of the preceding claims, a multiplicity of storage electrodes (12-14), which can be capacitively detected by the reading unit, and a multiplicity of coupling electrodes (21) being present, and a digital voltage jump being applied to the coupling electrodes in temporal succession, and the voltage jump produced at the reading electrode (22) being compared with a reference voltage.

13. Method according to Claim 12, **characterized in that** the means for comparing the voltage jump produced at the reading electrode (22) with a reference voltage are checked before and/or after a measurement.

14. Method according to Claim 12, **characterized in that** at least one reference electrode in the data storage medium is checked before and/or after reading the data storage medium (1).

15. Method according to Claim 12, **characterized in that** the storage electrodes (12-14) which can be capacitively detected by the reading unit form a redundant code arrangement, and checksums are formed or integrity tests are carried out after reading the data storage medium (1) in order to preclude any interference when reading the data storage medium (1).

## Revendications

1. Système d'enregistrement et de lecture d'informations comprenant un support de mémorisation de données (1) pour enregistrer une information et une unité de lecture (2) pour lire l'information enregistrée dans le support de mémorisation de données, le support de mémorisation de données présentant un diélectrique (10, 11) et l'information étant formée dans le support de mémorisation de données par la présence ou l'absence d'au moins une électrode d'enregistrement (12-14) détectable de manière capacitive par l'unité de lecture et l'unité de lecture présentant au moins une électrode d'injection et au moins une électrode de lecture, le support de mémorisation de données (1) et l'unité de lecture (2) pouvant être couplés ensemble pour la lecture de l'information de telle sorte qu'une électrode d'enregistrement (12) présente, détectable de manière capacitive par l'unité de lecture, forme un premier condensateur avec l'électrode d'injection et un deuxième condensateur avec l'au moins une électrode de lecture (22),
**caractérisé en ce que** l'unité de lecture présente des moyens (23) pour générer un saut de tension numérique sur l'électrode d'injection (21) et des moyens (24) pour comparer le saut de tension produit sur l'électrode de lecture (22) avec une tension de référence.

2. Système selon la revendication 1, **caractérisé en ce que** les moyens (24) pour comparer le saut de tension produit sur l'électrode de lecture (22) avec une tension de référence présentent un amplificateur opérationnel (24a) branché en comparateur.

3. Système selon une ou plusieurs des revendications précédentes, **caractérisé en ce que** l'unité de lecture (2) présente en plus un microprocesseur (25) qui est en liaison avec les moyens pour générer le saut de tension numérique sur l'électrode d'injection (21) et avec les moyens (24) pour comparer le saut de tension produit sur l'électrode de lecture (22) avec une tension de référence.

4. Système selon une ou plusieurs des revendications précédentes, **caractérisé en ce qu'**une pluralité d'électrodes d'enregistrement (12-14) détectables de manière capacitive par l'unité de lecture et au moins une pluralité correspondante d'électrodes d'injection (21) forment une pluralité de premiers condensateurs et la pluralité d'électrodes d'enregistrement (12-14) détectables de manière capacitive par l'unité de lecture forme le deuxième condensateur avec une électrode de lecture.

5. Système selon une ou plusieurs des revendications précédentes, **caractérisé en ce que** les électrodes d'enregistrement (12-14) détectables de manière capacitive par l'unité de lecture forment un arrangement de code qui se compose de polymères organiques conducteurs, notamment du PEDOT ou du PANI.

6. Système selon une ou plusieurs des revendications précédentes, **caractérisé en ce que** les électrodes d'enregistrement (12-14) détectables de manière capacitive par l'unité de lecture forment un arrangement de code électriquement conducteur qui est généré par un procédé d'impression en grande série, notamment par un procédé d'impression en relief, en taille douce ou à plat.

7. Système selon une ou plusieurs des revendications précédentes, **caractérisé en ce que** les électrodes d'enregistrement (12-14) détectables de manière capacitive par l'unité de lecture forment un arrangement de code électriquement conducteur qui est appliqué sur des substrats souples tels que du papier ou un film.

8. Système selon une ou plusieurs des revendications précédentes, **caractérisé en ce que** les électrodes d'enregistrement (12-14) détectables de manière capacitive par l'unité de lecture forment un arrangement de code électriquement conducteur qui est disposé de manière invisible en surface entre deux substrats.

9. Système selon une ou plusieurs des revendications précédentes, **caractérisé en ce que** le support de mémorisation de données (1) présente une électrode d'enregistrement de référence qui est utilisée pour contrôler le lecteur (2).

10. Système selon une ou plusieurs des revendications précédentes, **caractérisé en ce que** les électrodes d'enregistrement (12-14) détectables de manière capacitive par l'unité de lecture forment un arrangement de code redondant.

11. Système selon une ou plusieurs des revendications précédentes, **caractérisé en ce que** les moyens (24) pour comparer le saut de tension produit sur l'électrode de lecture (22) avec une tension de référence présentent un filtre passe-bas et/ou un filtre passe-haut (24b) branché en amont pour filtrer les perturbations.

12. Procédé pour lire des informations depuis un support de mémorisation de données (1) selon une ou plusieurs des revendications précédentes, comprenant un lecteur (2) selon une ou plusieurs des revendications précédentes, une pluralité d'électrodes d'enregistrement (12-14) détectables de manière capacitive par l'unité de lecture et une pluralité d'électrodes d'injection (21) étant présentes, et les électrodes d'injection étant soumises chronologiquement l'une après l'autre à un saut de tension numérique et le saut de tension produit sur l'électrode de lecture (22) étant comparé avec une tension de référence.

13. Procédé selon la revendication 12, **caractérisé en ce que** les moyens pour comparer le saut de tension produit sur l'électrode de lecture (22) avec une tension de référence sont contrôlés avant et/ou après une mesure.

14. Procédé selon la revendication 12, **caractérisé en ce qu'**au moins une électrode de référence présente dans le support de mémorisation de données est contrôlée avant et/ou après la lecture du support de mémorisation de données (1).

15. Procédé selon la revendication 12, **caractérisé en ce que** les électrodes d'enregistrement (12-14) détectables de manière capacitive par l'unité de lecture forment un arrangement de code redondant et des sommes de contrôle sont calculées ou des essais d'intégrité sont effectués après la lecture du support de mémorisation de données (1) afin d'exclure d'éventuelles perturbations lors de la lecture du support de mémorisation de données (1).
